# EUROPÄISCHE PATENTSCHRIFT

(11) **EP 0 544 133 B1**
(45) Veröffentlichungstag und Bekanntmachung des Hinweises auf die Patenterteilung: **09.04.1997**
(21) Anmeldenummer: 92119010.4
(22) Anmeldetag: 06.11.1992
(51) Int. Cl.: H02H 7/093, H02H 7/085

(54) **Überlastabschaltung bei Elektromotoren für Stellantriebe**
Overload disconnection of electric motors for positioner
Déclenchement de surcharge de moteurs électriques pour positionneur

(30) Priorität: 23.11.1991 DE 9114596 U
(43) Veröffentlichungstag der Anmeldung: 02.06.1993
(73) Patentinhaber: Gretsch-Unitas GmbH Baubeschläge, D-71254 Ditzingen (DE)
(72) Erfinder: Renz, Walter, Dipl.-Ing. (FH), W-7257 Ditzingen (DE); Münch, Gerhard, W-7145 Markgröningen (DE)
(74) Vertreter: KOHLER SCHMID + PARTNER

(56) Entgegenhaltungen:
- DE-A- 2 945 204
- US-A- 4 521 894

## Beschreibung

Die Erfindung betrifft ein Verfahren und eine Vorrichtung zur Überlastabschaltung bei Elektromotoren für Stellantriebe an Fenstern, Türen, Markisen, Rolladen od. dgl.

Für solche Stellantriebe werden insbesondere kleine Einphasen-Asynchronmotoren bevorzugt, die zusammen mit einem Spindelgetriebe und den elektrischen Anschlüssen je nach Einbaulage am Blendrahmen für einen beweglichen Tür- oder Fensterflügel oder an einer Wandfläche unterzubringen sind, wobei das Spindelgetriebe direkt oder über ein Gestänge mit dem zu öffnenden Flügel bzw. Element verbunden ist.

Insbesondere bei solchen Türen, Fenstern, Markisen oder Rolladen, die automatisch mit Hilfe von Licht-, Temperatur- oder Rauchsensoren ohne menschliche Kontrolle auf- oder zusteuerbar sind, kann es vorkommen, daß im Stellweg des gestellten Objekts auftretende mechanische Hindernisse oder Reibungseinflüsse zu einer überlastung des Stellantriebsmotors bis hin zu dessen völligem Stillstehen führen. Auch bei Handbedienung kann eine überlastung unbemerkt bleiben, weil der Flügel von der Bedienungsstelle meist nicht direkt eingesehen werden kann. Es kann nämlich durchaus vorkommen, daß der Flügel bereits vor Erreichen der Endstellung klemmt.

Zur überlastabschaltung elektrischer Antriebsmotoren sind bislang ein Verfahren sowie eine Vorrichtung gebräuchlich, wie sie die DE-A 29 45 204 offenbart. Dabei erfolgt die Abschaltung eines elektrischen Antriebsmotors auf der Grundlage der von dem Antriebsmotor aufgenommenen Antriebsleistung bzw. des von dem Antriebsmotor aufgenommenen Stromes.

Die Vorveröffentlichung US-A-4,521,894 beschreibt ein Verfahren sowie eine Vorrichtung zur Drehzahlsteuerung schnell laufender Turbinen. In diesem Fall wird an einem Zählwerk ein Zählwert während der Dauer eines Zählintervalls verstellt. Der sich am Ende des Zählintervalls einstellende Zählwert wird mit einem vorgegebenen Grenzwert verglichen. Erst am Ende des Zählintervalls wird dementsprechend ein Ist-Soll-Wertvergleich für die Drehzahl durchgeführt und bei Vorliegen einer Abweichung des Ist-Wertes von dem Soll-Wert ein Steuersignal zur Regelung des Antriebs erzeugt.

Ausgehend von dem Stand der Technik nach der DE-A-29 45 204 liegt der Erfindung die Aufgabe zugrunde, ein Verfahren sowie eine Vorrichtung bereitzustellen, welche eine vom Motorstrom unabhängige und funktionssichere überlastabschaltung netzbetriebener Stellantriebsmotoren an Fenstern, Türen, Markisen, Rolladen od. dgl. erlauben.

Der Lösung der verfahrensbezogenen Aufgabe dient nach der Erfindung ein gattungsgemäßes Verfahren, bei dem fortlaufend die Motordrehzahl gemessen wird, indem bei laufendem Motor über einen Zeitgeber ein Zählwerk verstellt wird und der Zählerstand fortlaufend in einer Vergleichsvorrichtung mit einem insbesondere einstellbaren Grenzwert verglichen wird und das Zählwerk mittels eines vom Motor gesteuerten und zur Drehung der Motorwelle synchrone Impulse erzeugenden Impulsgebers zurückgesetzt wird und bei dem der Motor zumindest in seiner eingeschalteten Laufrichtung abgeschaltet wird, sobald der Zählerstand des Zählwerks den Grenzwert überschreitet. Durch diese Lösung wird vorteilhafterweise eine Motorüberlastung sehr schnell erkannt, und die Abschaltung kann daraufhin sehr schnell reagieren. Dadurch, daß der Grenzwert, wie bevorzugt, einstellbar ist, läßt sich die erfindungsgemäße Überlastabschaltung an unterschiedliche Einsatzbedingungen, d.h. Lastbedingungen des Stellantriebsmotors anpassen.

Wird der Motor nur für die Drehrichtung abgeschaltet, in der die Motorüberlastung auftrat, so läßt er sich vorteilhafterweise manuell oder automatisch in der entgegengesetzten Richtung starten, um damit das gestellte Objekt von der die überlastung hervorrufenden Position wegzubewegen. Wird dagegen der Stellantriebsmotor für beide Drehrichtungen abgeschaltet, so muß zunächst das die überlastung hervorrufende Hindernis beseitigt und die Abschaltung manuell zurückgesetzt werden. Je nach Einsatzfall des Stellantriebs kann die eine oder auch die andere Verfahrensweise Vorteile bringen.

Die obengenannte vorrichtungsbezogene Aufgabe wird im Sinne der Erfindung mittels einer gattungsgemäßen Vorrichtung gelöst, im Falle derer ein Zählwerk an einem Rücksetzeingang mit einem auf der Motorwelle oder auf einer vom Motor angetriebenen Welle angeordneten Impulsgeber und an einem Zähleingang mit einem Zeitgeber verbunden ist, wobei an das Zählwerk eine mit einer Abschaltvorrichtung für den Motor gekoppelte Vergleichsvorrichtung für den Zählwerkwert und den insbesondere einstellbaren Grenzwert angeschlossen ist und wobei das Zählwerk mit der Vergleichsvorrichtung fortlaufend in Funktionsverbindung steht. Ein synchron zur Drehung der Motorwelle arbeitender Impulsgeber läßt sich beispielsweise in Form eines Hall-Sensors oder als Lichtschrankenfühler realisieren. Die vom Impulsgeber erzeugte Nominalfrequenz steht bei normalem Motorlauf in einer bestimmten Relation zur Frequenz von vom Zeitgeber erzeugten Impulsen.

Läuft der Motor langsamer, wird ein Grenzwert des Zählers erreicht bzw. überschritten, ehe der Impuls des Impulsgebers den Zähler auf Null zurücksetzt. Der eingespeicherte Grenzwert, der einen maximalen Zählwert und damit eine minimale Drehzahl des Motors repräsentiert, wird in der Vergleichsvorrichtung mit dem Zählwert des Zählers verglichen und liefert das zum Ausschalten des Motors verwendete Ausschaltsignal, wenn der Zählwert des Zählers diesen Grenzwert erreicht oder übersteigt. Die Motorausschaltvorrichtung sperrt den Stellantriebsmotor für die momentane Laufrichtung.

Bei einem Neustart des Stellantriebsmotors in der entgegengesetzten Laufrichtung wird auch der Zähler auf Null zurückgesetzt und damit zur erneuten Erfassung des der Motordrehzahl entsprechenden Werts und gegebenenfalls einer auch in der Gegendrehrichtung vorliegenden Überlast freigegeben.

Bei einer vorteilhaften Weiterbildung ist der Zeitgeber über je ein UND-Glied sowie ein ODER-Glied mit dem Zahlwerk verbunden, wobei an den anderen Eingängen der beiden UND-Glieder jeweils ein Sensor für die beiden Drehrichtungen des Motors angeschlossen sind.

Vorzugsweise ist die Vergleichsvorrichtung über je ein UND-Glied mit einem Ausschalter für je eine Drehrichtung verbunden, wobei der andere Eingang des jeweiligen UND-Glieds mit einem Sensor für die zugehörige Drehrichtung des Motors verbunden ist. Dabei wird die momentan gesperrte Drehrichtung des Motors, durch Ansteuern der Gegenrichtung wieder freigegeben.

Nach einem weiteren Merkmal der Ertindung ist ein Mikrocomputer vorgesehen, wobei einige oder alle der Steuerelemente als Programmteile ausgebildet sind und der Computer somit Steuerfunktionen übernimmt.

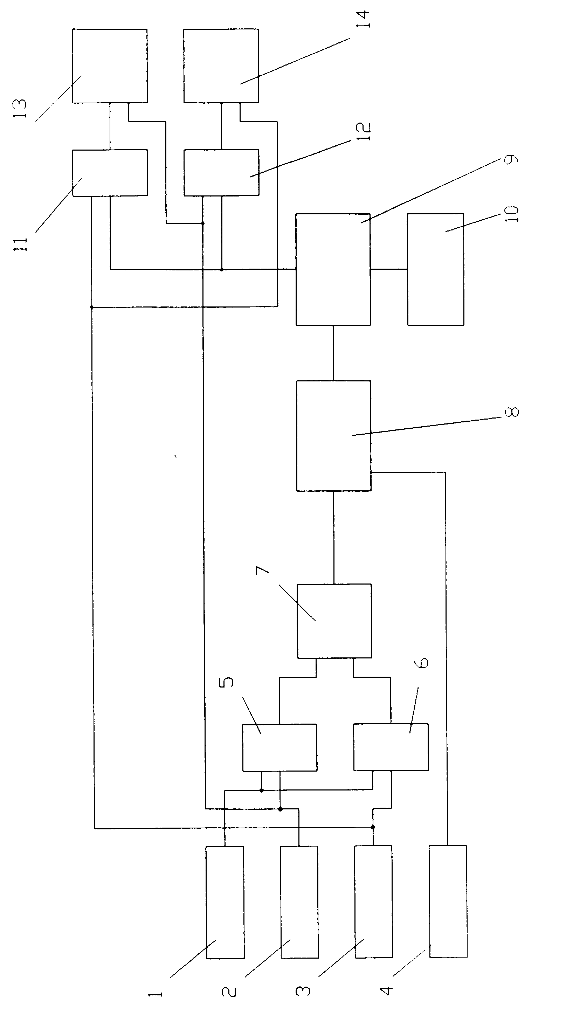

Die Zeichnung zeigt ein Ausführungsbeispiel der Erfindung und zwar in Form eines Prinzipschaltbildes.

Diese und weitere Merkmale der Erfindung werden im folgenden anhand der einzigen Zeichnungsfigur näher beschrieben, die ein bevorzugtes Ausführungsbeispiel der Erfindung darstellt.

Zwei paralle UND-Glieder 5 und 6 verknüpfen die Signale von zwei Sensoren 2 und 3 für die beiden Drehrichtungen des Motors mit einem Taktsignal von einem Zeitgeber 1. Die Ausgänge der beiden UND-Glieder 5 und 6 sind an die Eingänge eines ODER-Glieds 7 geführt, dessen Ausgang dem Zähleingang eines Zählwerks 8 zugeführt ist. An einem (Reset-)Eingang des Zählwerks 8 liegen von einem Impulsgeber 4 erzeugte Impulse an, die synchron zur Drehung der Motorwelle erzeugt werden. Diese Impulse setzen das Zählwerk aut Null zurück. Bevorzugt ist der Impulsgeber 4 als Hall-Sensor ausgebildet. Wenn sich der in der Figur nicht dargestellte Stellantriebsbmotor mit gewünschter Drehzahl dreht, kommt der Impuls zum Zurücksetzen, ehe das Zählwerk 8 den eingestellten Grenzwert erreicht hat. Der Zählwert des Zählwerks 8 ergibt sich aus den vom Zeitgeber 1 erzeugten Taktimpulsen. Wenn sich der Stellantriebsmotor dagegen aufgrund eines im Weg des gestellten Objektes befindlichen Hindernisses langsamer oder nicht dreht, steigt der vom Zählwerk 8 gezählte Zählwert an und erreicht oder überschreitet schließlich einen in einem Grenzwertstellglied 10 eingestellten, vorbestimmten Grenzwert. Das Überschreiten dieses Grenzwertes wird durch eine Vergleichsvorrichtung erfaßt, welche daraufhin an ihrem Ausgang ein Motoraus schaltsignal erzeugt. Dieses Motorausschaltsignal wird nun durch zwei parallele UND-Glieder 11 und 12 mit den von den Richtungssensoren 2 und 3 erzeugten Richtungssignalen verknüpft, so daß der Motor durch je einen von zwei Ausschaltern 13 und 14 nur in seiner momentanen Laufrichtung gestoppt wird, während die andere Laufrichtung freigegeben bleibt. Die Figur zeigt außerdem, daß jeder der Ausschalter 13 und 14 im Zustand der von den Richtungssensoren 2 und 3 erfaßten, jeweils umgekehrten Motordrehrichtung freigegeben wird, indem das am jeweiligen Ausgang der Richtungssensoren 2 und 3 abgegebene Drehrichtungssignal einem Rückwärtseingang des jeweiligen Ausschalters für die entgegengesetzte Drehrichtung zugeführt ist.

Die erfindungsgemäße Vorrichtung kann auch über eine serielle Schnittstelle an eine Zentralsteuerung angeschlossen werden. Die Werte des Motors wie: OFFEN-Stellung, ZU-Stellung, Einschaltzustand, Laufzeit usw. können dann zentral abgefragt werden. Die Steuerung kann übergeordnet von einer Zentrale erfolgen, wobei dann z.B. bei Steuerung über die Zentrale die Einzelsteuerung abgeschaltet wird.

## Patentansprüche

1. Verfahren zur Überlastungabschaltung bei Elektromotoren für Stellantriebe an Fenstern, Türen, Markisen, Rolladen od. dgl., dadurch gekennzeichnent, daß fortlaufend die Motordrehzahl gemessen wird, indem bei laufendem Motor über einen Zeitgeber (1) ein Zählwerk (8) verstellt wird und der Zählerstand fortlaufend in einer Vergleichsvorrichtung (9) mit einem insbesondere einstellbaren Grenzwert verglichen wird und das Zählwerk (8) mittels eines vom Motor gesteuerten und zur Drehung der Motorwelle synchrone Impulse erzeugenden Impulsgebers (4) zurückgesetzt wird und daß der Motor zumindest in seiner eingeschalteten Laufrichtung abgeschaltet wird, sobald der Zählerstand des Zählwerks (8) den Grenzwert überschreitet.

2. Verfahren nach Anspruch 1, dadurch gekennzeichnet, daß beim Abschalten der einen Drehrichtung die andere Drehrichtung zum Einschalten freigegeben bleibt.

3. Vorrichtung zur Ausübung des Verfahrens nach Anspruch 1 oder 2, dadurch gekennzeichnet, daß ein Zählwerk (8) an einem Rücksetzeingang mit einem auf der Motorwelle oder auf einer vom Motor angetriebenen Welle angeordneten Impulsgeber (4) und an einem Zähleingang mit einem Zeitgeber (1) verbunden ist, wobei an das Zählwerk (8) eine mit einer Abschaltvorrichtung (13, 14) für den Motor gekoppelte Vergleichsvorrichtung (9) für den Zählwerkwert und den insbesondere einstellbaren Grenzwert angeschlossen ist und daß das Zählwerk (8) mit der Vergleichsvorrichtung (9) fortlaufend in Funktionsverbindung steht.

4. Vorrichtung nach Anspruch 3, dadurch gekennzeichnet, daß der Zeitgeber (1) über je ein UND-Glied (5, 6) sowie ein ODER-Glied (7) mit dem Zahlwerk (8) verbunden ist, wobei an den anderen Eingängen der beiden UND-Glieder jeweils ein Sensor (2, 3) für die beiden Drehrichtungen des Motors angeschlossen sind.

5. Vorrichtung nach Anspruch 3 oder 4, dadurch gekennzeichnet, daß die Vergleichsvorrichtung (9) über je ein UND-Glied (11, 12) mit einem Ausschalter (13, 14) für je eine Drehrichtung verbunden ist, wobei der andere Eingang des jeweiligen UND-Glieds mit einem Sensor (2, 3) für die zugehörige Drehrichtung des Motors verbunden ist.

6. Vorrichtung nach Anspruch 5, dadurch gekennzeichnet, daß der Ausschalter in einer Drehrichtung durch einen Einschalter für die andere Drehrichtung freigegeben wird.

7. Vorrichtung nach einem oder mehreren der Ansprüche 3 bis 6, gekennzeichnet durch die Anordnung eines Mikrocomputers, wobei mindestens einige der Steuerelemente als Programmteile ausgebildet sind und der Computer damit Steuerfunktionen übernimmt.

## Claims

1. Method for breaking the circuit in the event of overloading in electric motors for actuators on windows, doors, awnings, roller shutters or similar devices, characterised in that the motor speed is continuously measured in that a counter (8) is shifted by means of a timer (1) when the motor is running and the counter content is continuously compared in a comparator (9) with a limit value, in particular an adjustable limit value, and the counter (8) is reset by means of a pulse generator (4) controlled by the motor and generating synchronous pulses for rotation of the motor shaft, and in that the motor is switched off, at least in its switched-on direction of running, as soon as the counter content of the counter (8) exceeds the limit value.

2. Method according to claim 1,
characterised in that on switching off the one direction of rotation, the other direction of rotation remains clear for switching on.

3. Device for implementing the method according to claim 1 or 2, characterised in that a counter (8) is connected at a re-set input to a pulse generator (4) ar-ranged on the motor shaft or on a shaft driven by the motor, and is connected at a counting input to a timer (1), wherein a comparator (9) for the counter value and the limit value, in particular an adjustable limit value, coupled to a circuit-breaker (13, 14) for the motor is connected to a timer (1), and in that the counter (8) is in continuous operative connection with the comparator (9).

4. Device according to claim 3,
characterised in that the timer (1) is connected to the counter (8) via each of two AND-members (5, 6) and an OR-member (7), a respective sensor (2, 3) for the two directions of rotation of the motor being connected to the other input of each of the two AND-members.

5. Device according to claim 3 or 4,
characterised in that the comparator (9) is connected to a circuit-breaker (13, 14) for a respective direction of rotation via a respective AND-member (11, 12), the other input of the respective AND-member being connected to a sensor (2, 3) for the associated direction of rotation of the motor.

6. Device according to claim 5,
characterised in that the circuit breaker is released in one direction of rotation by a circuit closer for the other direction of rotation.

7. Device according to one or more of claims 3 to 6, characterised by the provision of a microcomputer, wherein at least some of the control elements are in the form of programm parts and the computer thus assumes control functions.

## Revendications

1. Procédé de déclenchement de surcharge dans des moteurs électriques pour entraînements de réglage équipant des fenêtres, des portes, des stores, des volets roulants ou objets similaires, caractérisé par le fait que la vitesse angulaire du moteur est mesurée en permanence étant donné que, lorsque le moteur tourne, un compteur (8) est réglé par l'intermédiaire d'un générateur de rythme (1), l'index du compteur est comparé en permanence, dans un dispositif comparateur (9), à une valeur limite notamment réglable, et le compteur (8) est remis à zéro au moyen d'un générateur d'impulsions (4) commandé par le moteur, et engendrant des impulsions en synchronisme avec la rotation de l'arbre moteur ; et par le fait que le moteur est mis à l'arrêt, au moins dans son sens de marche enclenché, dès que l'index du compteur (8) excède la valeur limite.

2. Procédé selon la revendication 1, caractérisé par le fait que, lors de la neutralisation de l'une des directions de rotation, l'autre direction de rotation demeure autorisée.

3. Dispositif pour la mise en oeuvre du procédé selon la revendication 1 ou 2, caractérisé par le fait qu'un compteur (8) est raccordé, par une entrée de remise à zéro, à un générateur d'impulsions (4) implanté sur l'arbre moteur ou sur un arbre entraîné par le moteur et, par une entrée de comptage, à un générateur de rythme (1); un dispositif (9) de comparaison de la valeur du compteur et de la valeur limite notamment réglable, couplé à un dispositif (13, 14) de mise à l'arrêt du moteur, est connecté au compteur (8) ; et par le fait que le compteur (8) est, en permanence, en liaison fonctionnelle avec le dispositif comparateur (9).

4. Dispositif selon la revendication 3, caractérisé par le fait que le générateur de rythme (1) est raccordé au compteur (8) par l'intermédiaire d'un opérateur ET respectif (5, 6), ainsi que par l'intermédiaire d'un opérateur OU (7), des capteurs (2, 3), affectés aux deux directions de rotation du moteur, étant respectivement connectés aux autres entrées des deux opérateurs ET.

5. Dispositif selon la revendication 3 ou 4, caractérisé par le fait que le dispositif comparateur (9) est raccordé, par l'intermédiaire d'un opérateur ET respectif (11, 12), à un coupe-circuit (13, 14) respectivement affecté à une direction de rotation, l'autre entrée de l'opérateur ET considéré étant connectée à un capteur (2, 3) affecté à la direction de rotation correspondante du moteur.

6. Dispositif selon la revendication 5, caractérisé par le fait que le déclencheur dans une direction de rotation est libéré par un enclencheur affecté à l'autre direction de rotation.

7. Dispositif selon l'une ou plusieurs des revendications 3 à 6, caractérisé par l'implantation d'un micro-ordinateur, au moins quelques-uns des éléments de commande étant réalisés sous la forme de parties de programmes, de sorte que l'ordinateur remplit des fonctions de commande.
